# EUROPEAN PATENT SPECIFICATION

(11) **EP 0 916 474 B1**
(45) Date of publication and mention of the grant of the patent: **28.06.2006**
(21) Application number: 98309210.7
(22) Date of filing: 11.11.1998
(51) Int. Cl.: B29C 59/04, B29C 47/88, B05D 3/12, B32B 7/04

(54) **Method for producing textured thermoplastic film**
Verfahren zum Herstellen einer texturierten thermoplastischen Folie
Procédé pour produire une feuille texturée en matière thermoplastique

(30) Priority: 14.11.1997 US 65699 P; 04.06.1998 US 90508
(43) Date of publication of application: 19.05.1999
(73) Proprietor: GENERAL ELECTRIC COMPANY, Schenectady, NY 12345 (US)
(72) Inventor: Lilly, Kenneth Lee, Evansville, Indiana 47712 (US)
(74) Representative: Szary, Anne Catherine

(56) References cited:
- EP-A- 0 369 780
- WO-A-88/00217
- DE-A- 2 425 957
- NL-A- 8 602 018
- US-A- 5 281 371
- US-A- 5 411 788
- US-A- 5 670 240
- DATABASE WPI Section Ch, Week 8934 Derwent Publications Ltd., London, GB; Class A32, AN 89-244481 XP002094506 & JP 01 176477 A (DAINIPPON PRINTING CO LTD), 12 July 1989
- DATABASE WPI Section Ch, Week 9631 Derwent Publications Ltd., London, GB; Class A32, AN 96-305128 XP002094484 & JP 08 132515 A (SEKISUI CHEM IND CO LTD) , 28 May 1996

## Description

This invention relates to coated thermoplastic articles and, more particularly, relates to improved methods for providing smooth upper and lower surfaces to thermoplastic substrates that are particularly useful in optical media applications, such as CD-ROM cards. Such applications require the use of substrates having polished surfaces on both sides and a birefringence of less than twenty-five (25) nm. Further requirements for optical media applications include abrasion, chemical and UV radiation resistance, and clarity. Moreover, thermoplastic films must transmit, rather than reflect, light to be acceptable for optical applications.

Polycarbonate films generally have acceptable levels of clarity, and strength, but lack acceptable levels of birefringence, abrasion resistance, chemical and UV radiation resistance, and smoothness for optical applications. For example, uncoated polycarbonate films generally have high birefringence, which is in part due to the levels of stress which are placed on the film during its formation. This stress is frozen into the film upon cooling. Moreover, uncoated polycarbonate films generally have poor abrasion resistance and chemical resistance. Uncoated polycarbonate films are also susceptible to degradation by UV radiation.

US-A-5281371 discloses a method for forming a substrate sheet for optical recording media having a preformat on the surface. This method has the steps of extruding a melted resin to form a melted resin sheet, pressing the melted resin sheet between a mirror roll and a resin roll prior to the curing of the melted resin sheet, thereby forming a resin sheet, the resin roll being disposed in the face of the mirror roll and being covered on the peripheral surface thereof with a resin, and forming a photocurable resin composition layer on the surface of the resin sheet with which the resin roll has come in contact, and forming the preformat on the photocurable resin composition layer.

Radiation curable acrylic coatings and methods for their application to polycarbonate substrates are known. (See, e.g., European Patent No. 228,671). While conventional methods exist for applying radiation curable acrylic coatings to polycarbonate film, the adhesion of these cured coatings to the underlying polycarbonate can be less than desirable. Moreover, conventional methods do not carefully control the smoothness of the films, which is critical for optical applications. For these reasons, polycarbonate films have not been compatible with optical applications because the required adhesion, clarity and smoothness properties have not generally been attainable prior to the present invention.

Conventional radiation curable acrylic coating compositions are also problematic because they employ non-reactive solvents to reduce the viscosity of the coating compositions during application thereof to the polycarbonate substrate. These non-reactive volatile components must later be eliminated from the coatings by applying a forced hot air drying system, which may produce a coating having unacceptable bubbles and surface roughness. It is also undesirable to use coating compositions containing substantial levels of non-reactive, volatile components such as solvents, because they create environmental and safety concerns.

Abrasion resistant thermoplastic films having improved optical properties may be manufactured by curing a solvent-free radiation curable coating composition after application to the surface of a polymeric sheet or film. This curing process may be accomplished by directing radiant energy through the substrate opposite the surface being coated. This "cold-casting technique" is further illustrated in U.S. Patent No. 5,468,542, to Crouch. Although improved surface characteristics can be achieved with the radiation curable coating compositions disclosed in U.S. Patent No. 5,468,542, such coated thermoplastic films are not suitable for optical applications because no effort is made to match the indices of refraction of the coating and substrate to avoid light reflection at the interface (i.e., provide a low delta refractive index).

In summary, conventional methods are inadequate for producing thermoplastic film suitable for use in optical media applications, because such methods do not produce thermoplastic film that has acceptable levels of birefringence, abrasion resistance, chemical and UV resistance, smoothness, and clarity together with a low delta refractive index (i.e., the difference in refractive index between the coating and the substrate). Specifically, birefringence, which is related to the residual stress in the film upon molding and cooling, must preferably be kept below 25 nm. Also, the film must be polished on both sides to avoid light scattering. Moreover, if the film is coated, the delta refractive index must be sufficiently low to avoid unacceptable light reflection at the interface.

It is also generally known in theory to produce polycarbonate films by extruding heated resin and passing the extruded resin through a nip between two polished metal rolls. This process is unsuitable for producing low birefringence films because it introduces a high level of stress in the films which increases the birefringence of said films.

In view of the foregoing, it would be advantageous to provide thermoplastic films which are suitable for optical media applications. It would further be desirable to provide an efficient method for making such films which avoids the shortcomings of the prior art.

Accordingly, it is one object of the invention to provide coated thermoplastic films wherein the top and bottom surfaces are sufficiently smooth to avoid unacceptable light scattering, and the Delta refractive index between the coating and film is sufficiently low to avoid unacceptable light reflection at the interface.

It is another object of this invention to provide a method for producing coated thermoplastic films, which method does not require using solvents or other volatiles which may lead to imperfections in the films and present environmental concerns.

It is another object of this invention to provide a method of making coated films which exhibit good adhesion between the coating and the film substrate.

It is yet another object of the invention to provide a method of making a coated film having low birefringence.

It is another object of the invention to provide a method of making a one-side textured, one-side polished film substrate having low residual stress that is coated to form a film having two smooth surfaces.

It is a further object of the invention to provide a method of making a coated thermoplastic film which is compatible with optical applications wherein the coating adheres strongly to the substrate.

### SUMMARY OF THE INVENTION

The present invention provides a coated thermoplastic film comprising a thermoplastic substrate having an upper and lower surface wherein said upper surface is textured, has a gloss of at least 90% at 85°, and a surface roughness of 20 to 40 nm, and said lower surface is polished; and an ultraviolet radiation cured acrylic coating layer on the upper surface of the substrate; wherein said coated film has (1) a birefringence of less than 25 nanometers, (2) a surface roughness of 3.0 to 10.0 nm and (3) a delta refractive index of less than 0.08 between the coating and thermoplastic substrate; said cured acrylic coating comprising the ultraviolet radiation reaction product of a brominated epoxy acrylic oligomer, a functional acrylate monomer, a silicone and a photoinitiator; and wherein said cured coating is directly adhered to said thermoplastic substrate by heating the curable coating composition and ultraviolet radiation curing the heated applied coating composition whereby an interlocking bond between the substrate and cured coating is formed.

The method according to claim 7 of the present invention for producing the above coated thermoplastic film substrates suitable for optical applications comprises a first step of passing a substrate thermoplastic film through a nip between an upper and a lower roll wherein the upper roll has a low friction surface which textures the upper surface of the substrate, and the lower roll is metallic and imparts a polished surface to the lower surface of the thermoplastic film substrate. This first step of the process produces a substrate having a textured top side and a polished bottom side. The low friction top roller preferably has sufficiently low friction such that the top side of the film has an opportunity to "slip" such that stress is reduced in the film below what would be obtained if the top roller were also metallic. This reduction in stress produces a substrate having lower birefringence.

Next, a curable coating is applied to the upper surface of the substrate, and is cured by heating and UV radiation curing. Upon curing, the curable coating forms a smooth coating upon the upper surface of the substrate. This coating is sufficiently smooth to avoid unacceptable scattering of a light beam impinging upon said surface. The curable coating composition is preferably selected such that the substrate and the coating have a sufficiently low delta refractive index to avoid unacceptable reflection of light at the interface between the coating and the substrate.

### BRIEF DESCRIPTION OF THE DRAWINGS

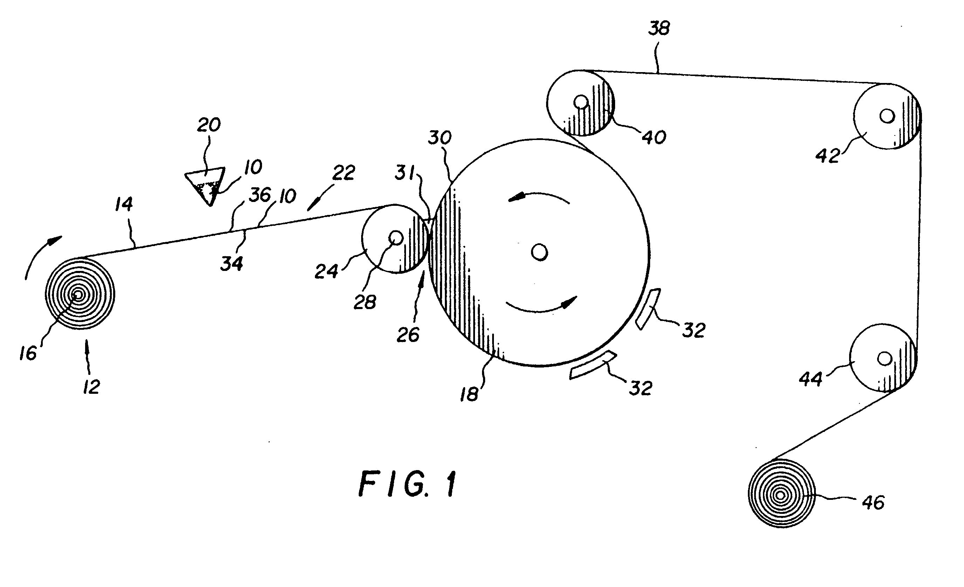

FIG. 1 is a horizontal elevational schematic view of equipment involving a casting drum for practicing the method of the present invention.

### DETAILED DESCRIPTION OF THE PREFERRED EMBODIMENTS

The present invention involves a method to produce a coated thermoplastic film suitable for optical application exhibiting exceptional smoothness of both upper and lower surfaces and low birefringence. The method includes first producing a low stress, one-side textured, and one-side polished polycarbonate film, wherein the textured side eighty-five degree (85°) gloss, measured in accordance with ASTM D523 is in the range of 90% to 100%. The Ra (surface roughness) of the uncoated substrate film is twenty (20) to forty (40) nm, and is preferably produced by using super smooth polytetrafluoroethylene (hereinafter "PTFE") TEFLON® material, having a surface roughness (hereinafter "Ra") of 0.3 to 0.8 µm, as the covering on the top roll. The bottom roll, which produces the polished side of the film, uses a standard chrome plated steel roll. The textured side of the film substrate is smoothed with a curable coating to an Ra of three (3) to ten (10) nm. This idea can be applied to other amorphous and crystalline thermoplastic materials, and is not limited to polycarbonate. Optical media applications generally require a film that has a polished surface on both sides and a birefringence of less than twenty-five (25) run. Other requirements include abrasion and ultraviolet (UV) resistance, substrate thickness consistency and ability to die cut the cured article immediately after lamination. Another requirement is that the substrate should be a barrier to water vapor. For purposes of this invention, a lower delta refractive index produces better results. Specifically, the delta RI is preferably less than 0.08, and more preferably is less than 0.05. A coating formulation disclosed in co-pending Application EP-A-0 916 705 meets these criteria.

The present invention discloses a novel process technique that will produce a low stress polycarbonate film 0.127 mm to 0.762 mm (0.005" to 0.030") that retains an excellent surface appearance. This technique can produce film with birefringence of less than twenty-five (25) nm and a surface gloss of ninety-two percent (92%). The substrates used in this process are preferably made from a polycarbonate resin. A preferred polycarbonate substrate for the method of the present invention is one formed from a thermoplastic polycarbonate material, such as LEXAN® resin, a product of General Electric Company. Typical examples of polycarbonate resins are described in U.S. Pat. No. 4,351,920, and are obtained by the reaction of aromatic dihydroxy compounds with phosgene. Other polycarbonate resins may be obtained by the reaction of aromatic dihydroxy compounds with carbonate precursors such as diaryl carbonates. U.S. Pat. No. 4,351,920 also describes various methods for the preparation of aromatic polycarbonate resins, which may be used as substrates in the present invention. A preferred aromatic dihydroxy compound is 2,2-bis(4-hydroxy phenyl) propane, (i.e., Bisphenol-A). The term aromatic polycarbonate resins is also meant to include polyester carbonates obtained from the reaction products of a dihydroxy phenol, a carbonate precursor and a dicarboxylic acid such as terephthalic acid and isophthalic acid. Optionally an amount of a glycol may also be used as a reactant. Polycarbonate film may be made by well-known methods. Typically, the molten thermoplastic is cast onto an extrusion roll stack, and both sides of the material are polished and pressed to a uniform thickness. Preferably the polycarbonate film has a thickness of from 0.127 mm to 0.508 mm (five (5) to twenty (20) mils). A preferred coating composition comprises (a) more than 75% by weight for a brominated epoxy acrylate mixed with an acrylate monomer, (b) less than 5% by weight of a photoinitiator, and (c) less than 20% by weight of a silicone.

Abrasion resistant thermoplastic composites having improved optical properties may also be made by effecting the cure of a solvent-less radiation curable coating composition which has been applied onto the surface of a polymeric sheet or film. The cure of the applied coating material can be effected while it is in contact with a smooth surface (cold casting) by directing radiant energy through the substrate opposite the surface being coated. (See, e.g., U.S. Patent No. 5,455,105). The "cold-casting technique" is further illustrated in U.S. Patent No. 5,468,542, issued to Crouch. Accordingly, the low stress film is produced by:
(Step 1) Producing a one-side textured, and one-side polished polycarbonate film. The textured side eighty-five degree (85°) gloss is in the range of ninety percent (90%) to 100%. The Ra (surface roughness) of the uncoated film is twenty (20) to forty (40) nm and is produced by using super smooth PTFE material (Ra of 0.3 to 0.8 µm) as the covering on the top roll. The bottom roll uses a standard chrome polish material, wherein Ra =0.05 µm.
(Step 2) Smoothing the textured side in step 1 with a curable coating to an Ra of three (3) to ten (10) nm.

### Examples

The following examples are provided merely to show one skilled in the art how to apply the principles discussed herein. These examples shall not be used to limit the scope of the appended claims.

### Example 1: A coating suitable for application to a one side polished, one side textured film.

The present example shows that best balance of optical, chemical, and abrasion resistance is given by the following coating formulation: 1 percent (1 %) Irgacure 819 photoinitiator, (phenyl bis (2,4,6 trimethyl benzoyl), 1 percent Darocur 1173 photoinitiator, ten percent (10 %) FCS100, and eighty-eight percent (88 %) RX-0726. The coating surface must be as smooth as possible to prevent laser scattering. Since the reflected laser signal contains the audio and video information from the CD-ROM, if scattering occurs, the information will be lost. It has been determined through experimentation that the coating finish must have a maximum Rz value of 2.0 µm (microns) or less.

| Formulation | Diameter Laser | Diffraction Spots | Finish (Rz) | Comment |
|---|---|---|---|---|
| Control | 0.7 mm | none | Laser only, no sample | |
| 1 | 0.45 | yes | 10 (micron) µm | |
| 2 | 0.60 | no | 2 (micron) µm | |
| 3 | 0.50 | yes | 6 (micron) µm | |
| 4 | 0.50 | yes | 5 (micron) µm | |

The tested formulations were as follows: Formulation #1 is = 88 wt% RX0726, 10% FCS100, and 2% Lucirin TPO; Formulation #2 is = 88 wt% RX0726,10% FCS100, and 1% Darocur 1173, and 1% Irgacure 819; Formulation #3 = 88 wt% RX0726, 10% FCS100, and 2% Darocur 1173; and Formulation #4 is 88 wt% RX0726, 10% FCS100,1 % Lucirin TPO, and 1% Darocur 1173. (Lucirin, Darocur and Irgacure are trade marks which may be registered in one or more of the countries designated by this application).

From the table above, it is apparent that formulation #2, which incorporates an organic compound, a photoinitiator and a silicone coating solution exhibits improved surface smoothness, and consequently, less laser scattering. While Lucirin TPO and Darocur 1173 provide adequate cross-linking in the bulk, only the combination of Darocur 1173 and Irgacure 819 provide adequate cross-linking in the bulk and surface. If the surface is not completely cross-linked, the finish will be compromised. It will be immediately recognized by those skilled in the art, however, that variations on the above Examples may provide equally improved results and are all within the intended scope of the present invention.

### Example 2: A process for coating a one-side polished, one-side textured film.

A suitable apparatus for applying and curing a coating on the surface of a polymeric substrate in accordance with the method of the present invention is depicted in FIG.1. In FIG.1, radiation-curable coating material 10 is continuously applied by flowing it onto the surface of the film at a controlled rate.

Substrate roll 12 is formed from a roll of uncoated substrate 14 surrounding a core 16. Substrate 14 is unwound pursuant to the movement of casting drum 18 (described below). Coating material 10 is applied to the surface of substrate 14 by dripping it onto the substrate 14 using an applicator 20. It will be apparent to those skilled in the art that adjustments may be made in the coating system in order to apply the coating to the substrate efficiently. Coating material 10 may be applied to substrate 14 by any of a number of well-known roll coating methods, such as spraying, brushing, curtain coating, and dipping, as well as other well-known roll coating methods, such as reverse roll coating, etc. The thickness of radiation-curable coating 10 applied to the substrate and the thickness of the resultant cured hard coat 21 is dependent upon the end use of the article and the physical properties desired, and their thickness may range from about 1.27µm (0.05 mil) to about 12.7 µm (5.0 mils) for the nonvolatile coating. The preferred thickness is from about 5.08 µm (0.2 mil) to about 25.4 µm (1.0 mil).

After coating material 10 is applied to substrate 14, the Coated substrate 22 is guided to nip roll 24. The choice of materials which form the nip roll 24 used in the present invention is not critical. The rolls may be made of plastic, metal (i.e. stainless steel, aluminum), rubber, ceramic materials, and the like. Nip roll 24 may be provided with a sleeve, preferably formed from a resilient material such as PTFE or polypropylene, or from one of the variety of currently available synthetic rubber compounds and blends thereof. The sleeve is snugly fitted over the roll surface to provide a smooth, friction-minimizing surface for contacting substrate 22. Nip roll 24 is adjustable relative to the position of casting drum 18, described below, and may optionally be independently driven.

As shown in FIG. 1, casting drum 18 is situated in a position adjacent nip roll 24, such that the outer circumferences of nip roll 24 and drum 18 are adjacent to each other at an interface defining a nip 26 which is described below. The applied pressure at the interface of nip roll 24 and drum 18 may be adjusted by well known methods, such as air cylinders (not shown), attached to the axle 28 of nip roll 24, which selectively urges the roll toward drum 18. Typically, the applied pressure at the interface is slight, i.e. less than 89 kg/m (five (5) pounds per linear inch), when the substrate is not passing through nip 26. The applied pressure can be readjusted according to a variety of parameters when a substrate having a coating thereon is passing through nip 26, as described below.

Casting drum 18 surrounds central axle 19, and is preferably made from a material which is conductive to heat, and preferably comprised of stainless steel or chromium-plated steel. Furthermore, it is preferred that the drum be independently driven by an outside power source (not shown).

Casting drum surface 30 may be provided with a wide variety of textures or patterns, depending upon the texture or pattern desired to be imparted to coating 10 and the resultant hardcoat 21. For instance, surface 30 may be provided with a highly polished chrome-plated surface if a high degree of gloss is desired for the hardcoat 21. If a lower sheen is desired for the hardcoat 21, surface 30 may be less polished so as to provide a matte texture to the coating.

Although a nitrogen blanket may be employed to ensure an anaerobic cure of the coating composition it is preferred that an anaerobic cure be obtained without the use of such a nitrogen blanket. In order to minimize the presence of air in the coating 10 prior to curing, without the use of a nitrogen gas blanket, the pressure capable of being exerted at nip 26 is carefully adjusted. The adjustment of applied pressure at nip 26 may be accomplished as described above. To obtain a certain coating thickness the exact pressure that will be exerted at nip 26 will depend on factors such as the viscosity of coating 10, the substrate speed, the degree of detail in the design pattern on surface 30 (if present), and temperature of the casting drum. Typically, for a substrate having a thickness of 381 µm (fifteen (15) mils) having applied thereon an acrylic-based coating having a thickness of 20.3 µm (0.8 mil) and a viscosity of 400 m Pa.s (centipoises), at a substrate speed of 25.4 cm/s (fifty (50) feet per minute) and a roll cover of 30 durometer hardness (Shore A) a nip pressure of 446.45 kg/m (twenty-five (25) pounds/linear inch) is applied to the coated substrate. Coating 10 is thereby pressed into contact with both substrate 22 and casting drum surface 30, thereby ensuring that there is a substantial absence of free diatomic oxygen from the coating during curing, so as the ensure a substantially complete curing of the coating and a cured coating, hardcoat 21, exhibiting a mirror image of the texture and/or pattern of casting drum surface 30. Excess coating forms a bead 31 of uncured coating composition material above the nip and across the width of the drum. This bead 31 ensures that adequate coating material enters through the nip 26 across the width of the drum.

After substrate 22 having coating 10 applied thereon passes through nip 26, the coating may be cured by means of ultraviolet radiant energy. As shown in FIG. I, means 32 transmits ultraviolet radiation energy into a surface 34 of substrate 22 opposite a surface 36 having coating 10 thereon. The radiant energy passes through the transparent substrate 22 and is absorbed by the coating 10, the latter being compressed between substrate 22 and drum surface 30. The preferred wavelength of the UV radiation is from about 2900 × 10⁻¹⁰ m (Angstroms) to about 4050 × 10⁻¹⁰ m (Angstroms). The lamp system used to generate such UV radiation may consist of discharge lamps, e.g. xenon, metallic halide, metallic arc, or high, medium, or low pressure mercury vapor discharge lamps, etc., each having operating pressures of from as low as a few Pa (millitorrs) up to about 1013 kPa (ten (10) atmospheres). The radiation dose level applied to coating 10 through substrate 22 may range from about two (2.0) J/cm² to about ten (10.0) J/cm². A typical curing system suitable for the present invention is a Linde medium pressure mercury lamp, as described in U.S. Pat. No. 4,477,529. The number of lamps directing light to the surface of the substrate is not critical; however, a greater number of lamps may allow a higher production rate for the substrate having coating 10 thereon. Typically, two lamps, each producing 300 watts / 2.54 cm (linear inch) of radiant energy, are sufficient for an acrylic-based coating having a thickness of about 12.7 µm (0.5 mil), when the production line speed is approximately 25.4 cm/s (fifty (50) feet/minute). Such a curing procedure should result in both the polymerization of the polyfunctional acrylic monomers and the cross-linking of the polymers to form hard, non-tacky coatings. The coating may receive the post curing by further exposure to ultraviolet radiation after leaving the surfaces of the casting drum.

After the layer of coating material has been applied to and cured on substrate 22 according to the method of the present invention, the resulting product is a hard coated polycarbonate film article 38 which is guided around idler rolls 40, 42 and 44 then collected on take-up roll 46, the latter typically being independently driven and capable of separating the hard coated polycarbonate article 38 from drum surface 30.

### Example 3: Forming a low birefringence one-side polished, one-side textured substrate film.

The one sided textured polycarbonate film (127 µm to 762 µm) (0.005" to 0.030") is made by extrusion. The melt is forced into a nip between two (2) rolls. The gap between the rolls determines the film thickness. The thickness consistency is +/- five percent (5%) for a 254 µm (0.010"film). This film is produced using a super smooth, insulating, PTFE sleeved roll with Ra surface roughness of twenty (20) to forty (40) nm on the top surface. The bottom roll is highly polished chrome. A more complete description of this apparatus appears in EP-A-0 916 705.

The coating is applied to the textured side of the substrated film to smooth out the surface. During the curing of the coating, the heat tends to further anneal the film and reduce the stress level. The gloss is measured at 60° with the backside painted black. The coating also provides improved abrasion, and chemical resistance and provides a barrier to water vapor (WVTR). Taber Abrasion Resistance (ASTM D1044) for a CS10F wheel, 500 grams, and 100 cycles in a change in percent (%) haze of between five to thirty (5-30). Chemical resistance (determined via a 24 hour surface exposure test at 120°F.) is exhibited for these common household materials (coffee, Chlorox, ketchup, and tea). The measured WVTR for an acrylic coated 254 µm (0.010") polycarbonate film was 0.5 to 1.0 grams water 645 cm² (100 in²) /24 hours. This WVTR measurement was performed at 23°C (73°F), and 100% relative humidity with a wet filter material, which was covered by glass to maintain control conditions. Furthermore, said film was placed under water and in similar conditions as above for one (1) week, and evidenced no failure nor damage. A suitable PTFE finishing roll sleeve for extruded plastic film in an optical media application is disclosed in EP-A-0 916 475.

## Claims

1. A coated thermoplastic film comprising
a thermoplastic substrate having an upper and lower surface wherein said upper surface is textured, has a gloss of at least 90% at 85°, and a surface roughness of 20 to 40 nm, and said lower surface is polished; and
an ultraviolet radiation cured acrylic coating layer on the upper surface of the substrate;
wherein said coated film has (1) a birefringence of less than 25 nanometers, (2) a surface roughness of 3.0 to 10.0 nm and (3) a delta refractive index of less than 0.08 between the coating and thermoplastic substrate; said cured acrylic coating comprising the ultraviolet radiation reaction product of a brominated epoxy acrylic oligomer, a functional acrylate monomer, a silicone and a photoinitiator; and wherein said cured coating is directly adhered to said thermoplastic substrate by heating the curable coating composition and ultraviolet radiation curing the heated applied coating composition whereby an interlocking bond between the substrate and cured coating is formed.

2. The coated thermoplastic film of claim 1 wherein the cured coating layer has a thickness of from 1.27 µm to 127 µm (0.05 to 5 mils).

3. The cured coated thermoplastic film of claim 1 having a substrate thickness of 127 µm to 762 µm (5 to 30 mils).

4. The coated thermoplastic film of claim 1 wherein the delta refractive index is less than 0.05.

5. The coated thermoplastic film of claim 1 wherein the thermoplastic film is an aromatic polycarbonate.

6. The coated thermoplastic film of claim 1 wherein the cured acrylic coating is the ultraviolet radiation reaction product of a coating composition comprising (a) more than 75 weight % of a brominated epoxy acrylate in combination with an acrylate monomer, (b) less than 5 weight % of a photoinitiator and (c) less than 20 weight % of a silicone said weight % being based on the total weight of the coating composition.

7. A method of producing the coated thermoplastic film substrate having an upper and lower surface wherein said upper surface is textured, has a gloss of at least 90% at 85°, and a surface roughness of 20 to 40 nm, and said lower surface is polished; and an ultraviolet radiation cured acrylic coating layer on the upper surface of the substrate; wherein said coated film has (1) a birefringence of less than 25 nanometers, (2) a surface roughness of 3.0 to 10.0 nm and (3) a delta refractive index of less than 0.08 between the coating and thermoplastic substrate; said cured acrylic coating comprising the ultraviolet radiation reaction product of a brominated epoxy acrylic oligomer, a functional acrylate monomer, a silicone and a photoinitiator; and wherein said cured coating is directly adhered to said thermoplastic substrate, said method comprising (a) passing a thermoplastic film through a nip between an upper and a lower roll wherein the upper roll has a low friction surface which textures the upper surface of the thermoplastic film and the lower roll is metallic and imparts a polished surface to the lower surface of the thermoplastic film substrate, (b) applying the curable coating composition to the first surface of the substrate; and (c) curing the coating composition by heating the curable coating composition and ultraviolet radiation curing the heated applied coating composition.

8. The method of claim 7 wherein the upper roll has a rubber surface.

9. The method of claim 8 wherein the roll has a polytetrafluoroethylene surface.

10. The method of claim 7 wherein the lower roll is a chrome-plated steel roll.

## Patentansprüche

1. Eine beschichtete thermoplastische Folie umfassend
ein thermoplastisches Substrat aufweisend eine obere und untere Oberfläche, wobei die obere Oberfläche texturiert ist, einen Glanzwert von wenigstens 90 % bei 85° hat, und eine Oberflächenrauhigkeit von 20-40 nm, und wobei die untere Oberfläche poliert ist; und
eine mittels ultravioletter Strahlung gehärtete acrylische Beschichtungsschicht auf der oberen Oberfläche des Substrats;
wobei die beschichtete Folie (1) eine Doppelbrechung von weniger als 25 Nanometern hat, (2) eine Oberflächenrauhigkeit von 3,0-10,0 nm und (3) ein Delta Brechungsindex von weniger als 0,08 zwischen der Beschichtung und dem thermoplastischen Substrat; wobei die gehärtete acrylische Beschichtung das ultraviolette Strahlungsreaktionsprodukt umfasst aus einem bromierten acrylischen Epoxyoligomer, einem funktionellen Acrylatmonomer, einem Silikon und einem Fotoinitiator; und wobei die gehärtete Beschichtung direkt mit dem thermoplastischen Substrat verbunden ist, indem man die härtbare Beschichtungszusammensetzung erhitzt und die aufgebrachte erhitzte Beschichtungszusammensetzung mittels ultravioletter Strahlung härtet, wobei eine wechselseitige Verbindung zwischen dem Substrat und der gehärteten Beschichtung gebildet wird.

2. Die beschichtete thermoplastische Folie nach Anspruch 1, wobei die gehärtete Beschichtungsschicht eine Dicke von 1,27 µm bis 127 µm (0,05 bis 5 mils) hat.

3. Die gehärtete beschichtete thermoplastische Folie nach Anspruch 1, aufweisend eine Substratdicke von 137 µm bis 762 µm (5-30 mils).

4. Die beschichtete thermoplastische Folie nach Anspruch 1, wobei das Delta des Brechungsindex kleiner als 0,05 ist.

5. Die beschichtete thermoplastische Folie nach Anspruch 1, wobei die thermoplastische Folie ein aromatisches Polycarbonat ist.

6. Die beschichtete thermoplastische Folie nach Anspruch 1, wobei die gehärtete acrylische Beschichtung das ultraviolette Strahlungsreaktionsprodukt einer Beschichtungszusammensetzung ist, umfassend (a) mehr als 75 Gew.-% eines bromierten Epoxyacrylats in Kombination mit einem Acrylatmonomer, (b) weniger als 5 Gew.-% eines Fotoinitiators und (c) weniger als 20 Gew.-% eines Silikons,
wobei sich die Gew.-% auf das Gesamtgewicht der Beschichtungszusammensetzung beziehen.

7. Ein Verfahren zur Herstellung des beschichteten thermoplastischen Foliensubstrats, das eine obere und eine untere Oberfläche hat, wobei die obere Oberfläche texturiert ist, einen Glanz von wenigsten 90 % bei 85° hat, und eine Oberflächenrauhigkeit von 20-40 nm, und wobei die untere Oberfläche poliert ist; und eine mittels ultravioletter Strahlung gehärtete acrylische Beschichtungsschicht auf der oberen Oberfläche des Substrats; wobei die beschichtete Folie (1) eine Doppelbrechung von weniger als 25 Nanometer hat, (2) eine Oberflächenrauhigkeit von 3,0-10,0 nm und (3) ein Delta des Brechungsindex von weniger als 0,08 zwischen der Beschichtung und dem thermoplastischen Substrat; wobei die gehärtete acrylische Beschichtung das Ultraviolett-Strahlungsreaktionsprodukt umfasst aus einem bromierten acrylischen Epoxyoligomer, einem funktionellen Acrylatmonomer, einem Silikon und einem Fotoinitiator; und wobei die gehärtete Beschichtung direkt mit dem thermoplastischen Substrat verbunden ist, bei welchem Verfahren man (a) eine thermoplastische Folie durch einen Spalt zwischen einer oberen und einer unteren Walze führt, wobei die obere Walze eine Oberfläche mit geringer Reibung aufweist, welche die obere Oberfläche der thermoplastischen Folie texturiert und die untere Walze metallisch ist und der unteren Oberfläche des thermoplastischen Foliensubstrats eine polierte Oberfläche verleiht, (b) die härtbare Beschichtungszusammensetzung auf die erste Oberfläche des Substrats aufbringt; und (c) die Beschichtungszusammensetzung härtet, indem man die härtbare Beschichtungszusammensetzung erhitzt und die erhitzte aufgebrachte Beschichtungszusammensetzung mittels ultraviolette Strahlung härtet.

8. Verfahren nach Anspruch 7, wobei die obere Walze eine Kautschukoberfläche hat.

9. Verfahren nach Anspruch 8, wobei die Walze eine Polytetrafluorethylen-Oberfläche hat.

10. Verfahren nach Anspruch 7, wobei die untere Walze eine mit Chrom beschichtete Stahlwalze ist.

## Revendications

1. Film thermoplastique revêtu, comprenant :
- un substrat thermoplastique présentant une surface supérieure et une surface inférieure, laquelle surface supérieure est texturée et présente un éclat d'au moins 90 % sous 85° et une rugosité de surface de 20 à 40 nm, et laquelle surface inférieure est polie,
- et une couche de revêtement de résine acrylique durcie par exposition à un rayonnement ultra-violet, disposée sur la surface supérieure du substrat ;
lequel film revêtu présente
1) une biréfringérence inférieure à 25 nm,
2) une rugosité de surface de 3,0 à 10,0 nm,
3) et une différence d'indice de réfraction inférieure à 0,08 entre le substrat thermoplastique et le revêtement ;
dans lequel film ledit revêtement de résine acrylique durci comprend le produit de réaction, sous l'action d'un rayonnement ultraviolet, d'un oligomère acrylique époxy bromé, d'un monomère fonctionnel de type acrylate, d'une silicone et d'un photo-amorceur ;
et dans lequel film on a directement collé ledit revêtement durci audit substrat thermoplastique en chauffant la composition durcissable de revêtement et en faisant durcir, par exposition à un rayonnement ultraviolet, la composition de revêtement étalée et chauffée, grâce à quoi il s'est formé une liaison avec accrochage réciproque entre le substrat et le revêtement durci.

2. Film thermoplastique revêtu, conforme à la revendication 1, dans lequel l'épaisseur de la couche de revêtement durci vaut de 1,27 à 127 µm (de 0,05 à 5 millièmes de pouce).

3. Film thermoplastique à revêtement durci, conforme à la revendication 1, dans lequel l'épaisseur du substrat vaut de 127 à 762 µm (de 5 à 30 millièmes de pouce).

4. Film thermoplastique revêtu, conforme à la revendication 1, dans lequel ladite différence d'indice de réfraction est inférieure à 0,05.

5. Film thermoplastique revêtu, conforme à la revendication 1, lequel film thermoplastique est en un polycarbonate aromatique.

6. Film thermoplastique revêtu, conforme à la revendication 1, dans lequel le revêtement de résine acrylique durci est le produit de réaction, sous l'action d'un rayonnement ultraviolet, d'une composition de revêtement comprenant :
a) plus de 75 % en poids d'un acrylate époxy bromé, en combinaison avec un monomère acrylate,
b) moins de 5 % en poids d'un photo-amorceur,
c) et moins de 20 % en poids d'une silicone,
ces pourcentages pondéraux étant rapportés au poids total de la composition de revêtement.

7. Procédé de production d'un film thermoplastique revêtu, comprenant :
- un substrat présentant une surface supérieure et une surface inférieure, laquelle surface supérieure est texturée et présente un éclat d'au moins 90 % sous 85° et une rugosité de surface de 20 à 40 nm, et laquelle surface inférieure est polie,
- et une couche de revêtement de résine acrylique durcie par exposition à un rayonnement ultra-violet, disposée sur la surface supérieure du substrat ;
lequel film revêtu présente
1) une biréfringérence inférieure à 25 nm,
2) une rugosité de surface de 3,0 à 10,0 nm,
3) et une différence d'indice de réfraction inférieure à 0,08 entre le substrat thermoplastique et le revêtement ;
dans lequel film ledit revêtement de résine acrylique durci comprend le produit de réaction, sous l'action d'un rayonnement ultraviolet, d'un oligomère acrylique époxy bromé, d'un monomère fonctionnel de type acrylate, d'une silicone et d'un photo-amorceur ;
et dans lequel film on a directement collé ledit revêtement durci audit substrat thermoplastique ;
lequel procédé comporte les étapes suivantes :
a) faire passer un film thermoplastique dans l'interstice entre un rouleau supérieur et un rouleau inférieur, lequel rouleau supérieur présente une surface à faible frottement qui donne un aspect texturé à la surface supérieure du film thermoplastique, et lequel rouleau inférieur est un rouleau métallique qui donne un aspect poli à la surface inférieure du film thermoplastique constituant le substrat ;
b) étaler la composition de revêtement durcissable sur la surface supérieure du substrat ;
c) et faire durcir cette composition de revêtement en chauffant la composition durcissable de revêtement et en faisant durcir, par exposition à un rayonnement ultraviolet, la composition de revêtement étalée et chauffée.

8. Procédé conforme à la revendication 7, dans lequel le rouleau supérieur est doté d'une surface en caoutchouc.

9. Procédé conforme à la revendication 8, dans lequel le rouleau supérieur est doté d'une surface en polytétrafluoroéthylène.

10. Procédé conforme à la revendication 7, dans lequel le rouleau inférieur est un rouleau en acier chromé.
